# EUROPÄISCHE PATENTSCHRIFT

(11) **EP 1 484 548 B1**
(45) Veröffentlichungstag und Bekanntmachung des Hinweises auf die Patenterteilung: **09.08.2006**
(21) Anmeldenummer: 04012870.4
(22) Anmeldetag: 01.06.2004
(51) Int. Cl.: F21S 8/10, F21V 14/08, F21V 11/16, F21V 1/24, F21S 8/00

(54) **Scheinwerfer für ein Kraftfahrzeug**
Vehicle headlamp
Projecteur pour véhicule

(30) Priorität: 06.06.2003 DE 10326148
(43) Veröffentlichungstag der Anmeldung: 08.12.2004
(73) Patentinhaber: DaimlerChrysler AG, 70567 Stuttgart (DE)
(72) Erfinder: Holz, Michael, 89250 Senden (DE)

(56) Entgegenhaltungen:
- EP-A- 1 191 279
- DE-A1- 19 548 187
- US-A- 2 945 985
- US-A1- 2003 223 246

## Beschreibung

Die Erfindung betrifft einen Scheinwerfer für ein Kraftfahrzeug nach dem Oberbegriff des Patenanspruchs 1. Ein solcher ist aus der deutschen Offenlegungsschrift DE 197 31 754 A1 und aus der Druckschrift US 2003 223 246 bekannt.

Zur Gewährleistung der Augensicherheit des beschriebenen Scheinwerfers wird eine Photodiode und ein zugehöriger Vorverstärker sowie eine Steuerung vorgesehen, durch welche erfasst wird, ob die Lichtquelle sichtbares Licht aussendet oder nicht. Sendet sie Licht aus, so wird durch die Steuerung die Quelle für Infrarotstrahlung, die Teil eines IR-Abstandssensor ist, keine Beschränkung der Ausgangsleistung der Quelle für Infrarotstrahlung bewirkt, wohingegen sie im Fall einer Nichtdetektion von Licht eine Beschränkung der Ausgangsleistung der Quelle für Infrarotstrahlung vorsieht. Durch diese Beschränkung wird die Ausgangsleistung reduziert und dadurch die Gefahr einer Schädigung der Augen durch die Infrarotstrahlung verhindert. Ist die Lichtquelle in Betrieb, so wird gleichzeitig sichtbares Licht und Infrarotstrahlung ausgesendet, wodurch eine ausreichende Augensicherheit aufgrund des Lidschlußreflexes beleuchteter Verkehrsteilnehmer erreicht ist.

Der Erfindung liegt die Aufgabe zugrunde, einen Scheinwerfer für Kraftfahrzeuge anzugeben, der auf einfache und robuste Weise eine ausreichende Augensicherheit gewährleistet.

Diese Aufgabe wird durch einen Scheinwerfer mit den Merkmalen Anspruchs 1 gelöst.

Vorteilhafte Weiterbildungen sind Gegenstand der Unteransprüche.

Der erfindungsgemäße Scheinwerfer zeigt eine Lichtquelle für sichtbares Licht und eine Quelle für Infrarotstrahlung, die eine längere Wellenlänge als das sichtbare Licht aufweist, sowie eine Scheibe, durch die das sichtbare Licht und die Infrarotstrahlung aus dem Scheinwerfer austritt sowie ein Bimetallelement, das im Scheinwerfer so angeordnet und ausgebildet ist, dass es bei Betrieb der Lichtquelle den Strahlungsweg der Infrarotstrahlung von der Quelle für Infrarotstrahlung zur Scheibe nicht unterbricht und damit offen hält, wohingegen im Nichtbetrieb der Lichtquelle der Strahlungsweg der Infrarotstrahlung von der Quelle zu der Scheibe unterbrochen ist. Dies wird dadurch erreicht, dass die Lichtquelle für sichtbares Licht im Betrieb ihre Umgebung aufwärmt, so dass das Bimetallelement entsprechend seiner Temperatur eine andere Gestalt einnimmt als bei dem Nichtbetrieb der Lichtquelle, was zu einer deutlich niedrigeren Temperatur in der Umgebung der Lichtquelle und damit des Bimetallelements führt. Diese unterschiedlichen äußeren Gestalten des Bimetallelementes in Abhängigkeit der Temperatur ermöglichen es, den Zustand Betrieb oder nicht Betrieb der Lichtquelle sicher zu unterscheiden, und dementsprechend den Strahlungsweg zwischen der Quelle für infrarote Strahlung und der Scheibe zu unterbrechen oder zu öffnen. Durch die Anordnung und Verwendung eines Bimetallelements im Bereich der Lichtquelle ist eine sehr robuste und kostengünstige Vorkehrung geschaffen, die verhindert, dass der Scheinwerfer ausschließlich infrarote Strahlung von beachtlicher Leistung aussendet und dadurch eine Gefährdung der Augen anderer Verkehrsteilnehmer bewirken kann. Durch diese Ausbildung des Scheinwerfers für ein Kraftfahrzeug mit dem Bimetallelement gelingt es, eine ausreichende Augensicherheit zu gewährleisten. Dies gelingt auch unter sehr schwierigen äußeren Rahmenbedingungen, die in einem Fahrzeug regelmäßig auftreten. Beispielsweise ist dieser Scheinwerfer auch unter erheblichen Vibrationen sicher funktionsfähig, was bei den aus den Stand der Technik bekannten Scheinwerfern mit aufwändiger Elektronik und zugehöriger Verschaltungstechnik so nicht gegeben ist.

Bei dem erfindungsgemäßen Scheinwerfer wird durch das Bimetallelement entweder der Strahlungsweg vollständig oder weitgehend unterbrochen, was zu der ausreichenden Augensicherheit führt, indem die ausgestrahlte Leistung erheblich abgesenkt oder vollständig und damit auf Null abgesenkt wurde. In entsprechender Weise wird beim Betrieb der Lichtquelle der Strahlungsweg zumindest so weit frei gegeben, dass die gewünschte IR-Strahlungsleistung von dem Scheinwerfer abgegeben wird. Dabei kann der Strahlungsweg der infraroten Strahlung vollständig oder auch nur zu einem überwiegendem Teil oder weitgehend geöffnet sein.

Dabei wird das Bimetallelement so ausgebildet, dass die verwendeten Materialien und die Ausdehnung des Bimetallelementes sicherstellen, dass die gewünschte Verformung bei der in der Position des Bimetallelementes erwarteten Temperaturdifferenz so erreicht wird, dass die Unterbrechung bzw. Öffnung des Strahlungsweges ermöglicht wird.

Es hat sich als sehr vorteilhaft erwiesen, das Bimetallelement in Form eines insbesondere geradlinigen Streifens oder in Form einer Spirale oder in Form einer Wendel auszubilden. Durch diese ausgewählten Formen des Bimetallelementes gelingt es in bevorzugter Weise, den Strahlungsweg der infraroten Strahlung in sicherer Weise zu öffnen oder zu unterbrechen. Dabei haben sich insbesondere die spiralförmigen oder wendelförmigen Ausbildungen des Bimetallelementes besonders bewährt, da diese aufgrund ihrer Länge zu einer ausgeprägten Auslenkung bzw. Gestaltänderung des Bimetallelementes bei Temperaturänderung zeigen und dadurch schon bei relativ kleinen Temperaturänderungen ein sicheres Öffnen oder unterbrechen des Lichtweges herbeiführen können. Dies führt bei den typischerweise beachtlichen temperaturunterschieden zu einem sehr schnellen und sicheren Unterbrechen oder Öffnen des Strahlungswegs, was im Hinblick auf die Augensicherheit von besonderem Interesse ist.

Darüber hinaus hat es sich als sehr vorteilhaft erwiesen, das Bimetallelement in unmittelbarer Nähe der Lichtquelle für sichtbares Licht, welche insbesondere als Halogenlampe oder als Gasentladungslampe ausgebildet ist, anzuordnen. Dadurch ist in besonders vorteilhafter Weise sichergestellt, dass das Bimetallelement sich in seiner Temperatur sehr deutlich der Temperatur der Lichtquelle anpasst und damit eine sehr aussagekräftige, verlässliche Information über den Betriebszustand der Lichtquelle auf Basis der Temperatur der Lichtquelle und damit auf Basis der Temperatur des Bimetallelementes gibt. Gerade bei der Verwendung von Halogenlampen bzw. Gasentladungslampen ist die Temperatur der Lichtquelle im Betrieb sehr hoch und im Nichtbetrieb gering, so dass das in unmittelbarer Nähe der Lichtquelle befindliche Bimetallelement sich sehr starken betriebszustandsselektiven Temperaturschwankungen unterworfen sieht und dadurch sehr ausgeprägte Auslenkungen oder andere Veränderungen der Gestalt unterworfen ist. Diese Veränderungen führen zu einem sehr schnellen und sicheren Öffnen oder Unterbrechen des Strahlungsweges und damit zu einem sehr augensicheren Scheinwerfer.

Als besonders vorteilhaft hat es sich erwiesen, das Bimetallelement entlang der Lichtquelle, insbesondere in unmittelbarer Nähe zu dieser, anzuordnen, so dass die Temperatur des Bimetallelements über seine Länge oder über wesentliche Teile seiner Länge in engem Wirkkontakt mit der Lichtquelle stehen kann, so dass der Temperatureinfluss der Lichtquelle auf das Bimetallelement sehr ausgeprägt ausgebildet ist. Dies führt zu einer verbesserten Bimetallanordnung und damit zu einer verbesserten Funktionsweise des erfindungsgemäßen Scheinwerfers.

Eine besonders bevorzugte Ausbildung des erfindungsgemäßen Scheinwerfers für ein Kraftfahrzeug zeigt eine Quelle für die Infrarotstrahlung mit einer ausgeprägten, gerichteten Abstrahlcharakteristik für die Infrarotstrahlung, durch welche es gelingt, sehr effizient den Strahlungsweg zwischen der Quelle und der Scheibe zu unterbrechen. Dabei haben sich insbesondere die Verwendung von Infrarotlaserquellen, insbesondere in Form in IR-VCSL-Dioden bzw. von Infrarot-LED's oder von Glasfaserlichtquellenleitern respektive deren Ende bewährt. Gerade die Verwendung einer Glasfaser als Quelle für die infrarote Strahlung ermöglicht es, die Glasfaser bzw. das Ende der Glasfaser sehr nahe an die Lichtquelle heranzuführen, was zu einer sehr kompakten und einfachen Bauweise des Scheinwerfers führt, da es durch diese Verwendung im besonderen möglich wird, für den Strahlenweg der Infrarotstrahlung dieselben optischen Elemente - wie beispielsweise Reflektoren, Linsen, Blenden oder Filter - zu verwenden, wie sie für die durch die Lichtquelle ausgesandten sichtbaren Lichtstrahlen verwendet werden. Eine aufwändige mehrfache Ausbildung von verschiedenen optischen Elementen einerseits für die infrarote Strahlung und andererseits für das sichtbare licht ist gerade bei der Verwendung einer Quelle in Form einer Glasfaser nicht erforderlich und führt somit zu einem sehr einfachen, kompakten und damit auch robusten Scheinwerfer. Durch die ausgeprägte, gerichtete Abstrahlcharakteristik der Infrarotstrahlung aus der Quelle gelingt es darüber hinaus insbesondere dann, wenn das Bimetallelement in unmittelbarer Nähe der Quelle angeordnet ist, den Strahlungsweg sicher zu öffnen bzw. zu unterbrechen. Dabei kann durch die ausgeprägte Abstrahlcharakteristik das Bimetallelement bzw. der Bereich des Bimetallelementes, der den Strahlungsweg unterbricht oder öffnet, sehr kompakt ausgebildet sein, was wiederum zu einem kompakten und robusten sowie einfach aufgebauten Scheinwerfer für infrarote Strahlung und sichtbares Licht führt.

Die Verwendung von Infrarotlaserquellen, von IR-VCSELs bzw. von Infrarot-LED's hat sich besonders bewährt, da diese sehr lichtstarke und im Verhältnis zu ihrer Lichtstärke bzw. Lichtleistung flächig kleine Quellen für infrarote Strahlen mit entsprechend kleinem Abstrahlungsquerschnitt darstellen und damit mittels eines aufgrund geänderter Temperatur in seiner Gestalt veränderlichen Bimetallelementes verlässlich unterbrochen oder geöffnet werden können. Gerade eine solche kleinflächige Quelle für infrarote Strahlung in Verbindung mit einem Bimetallelement, welches sich in unmittelbarer Nähe oder in direktem Kontakt mit der Quelle befindet, erweist sich als sehr vorteilhaft, da sich hier die Vorteile im Hinblick auf kompakte, robuste und kostengünstige Realisierung eines augensicheren Scheinwerfers für ein Kraftfahrzeug in besonderem Maße ergänzen und verstärken.

Es hat sich dabei besonders bewährt, dass das Bimetallelement so auszubilden bzw. anzuordnen, dass das Bimetallelement eine Ausnehmung aufweist, durch welche die infrarote Strahlung beim Betrieb der Lichtquelle zur Scheibe hin hindurchtritt, während beim Nichtbetrieb der Lichtquelle der Strahlungsweg durch das Bimetallelement unterbrochen ist. Dabei hat es sich als besonders vorteilhaft erwiesen, die Ausnehmung so auszubilden und das Bimetallelement so anzuordnen, dass durch die Ausnehmung in dem Betriebszustand der Lichtquelle eine Strahlformung der Infrarotstrahlung erfolgt. Dies führt dazu, dass eine zielgerichtete Bestrahlung der Umgebung durch den Scheinwerfer für ein Kraftfahrzeug mittels Infrarotstrahlung erreicht werden kann, ohne dass es eine Vielzahl weiterer aufwändiger zusätzlicher Elemente beispielsweise in Form von Blenden oder anderen optisch frequenzselektiven Elementen bedarf. Damit gelingt es, eine sehr einfache Realisierung des Scheinwerfers zu erreichen und dabei durch die relativ kleine Ausbildung der Ausnehmung ein sehr schnelles sicheres Unterbrechen des Strahlungsweges zu erreichen.

Alternativ hierzu hat es sich besonders bewährt, das Bimetallelement im Bereich der Quelle für infrarote Strahlung flächig erweitert auszubilden, wodurch es gelingt, den Strahlungsweg der infraroten Strahlung sicherer und effizienter und verlässlicher durch die Erweiterung zu unterbrechen als es durch eine nicht erweiterte Ausbildung des Bimetallelementes typisch erreicht wird. Wird die flächige Erweiterung im Endbereich des Bimetallelementes angeordnet und so im Strahlungsweg der infraroten Strahlung angeordnet, gelingt es darüber hinaus aufgrund der ausgeprägten Veränderung der Gestalt des Bimetallelementes bei Temperaturänderung über die ganze Länge des Bimetallelementes den ganzen oder weitgehend den ganzen Querschnitt des Strahlungsweges der infraroten Strahlung frei zu geben bzw. zu unterbrechen. Diese Anordnung hat sich als besonders wirkungsvoll erwiesen, wenn das Bimetallelement über die ganze oder wesentliche Teile der Länge in unmittelbarer Nähe der Lichtquelle angeordnet ist und somit eine ausgeprägte Änderung der Gestalt und damit der Lage der flächigen Erweiterung des Bimetallelementes erreicht werden kann. Dies führt zu einer sehr vorteilhaften Weiterbildung der Erfindung.

Drüber hinaus hat es sich besonders bewährt, den Scheinwerfer mit einem Gehäuse auszubilden, das mit der Scheibe eine im wesentlichen geschlossene oder vollständig geschlossene Einheit ergibt. In dieser ist die Lichtquelle für sichtbares Licht und die Quelle für infrarote Strahlung in Form einer Glasfaser, welche nahe der Lichtquelle angeordnet ist, festgelegt. Die Glasfaser endet im Bereich der Lichtquelle für sichtbares Licht und führt durch einen Durchbruch im Gehäuse aus dem Gehäuse heraus. Die infrarote Strahlung wird dabei von außen in die Glasfaser eingekoppelt und über die Glasfaser in das innere des Gehäuses des Scheinwerfers geführt und nahe der Lichtquelle für sichtbares Licht aus der Glasfaser ausgekoppelt. Das Bimetallelement ist im Bereich der Lichtquelle so angeordnet, dass es in seinem Endbereich geeignet ist, vor dem Ende der Glasfaser zum Liegen zu kommen. Dabei ist es so ausgebildet, dass es beispielsweise während des Betriebes der Lichtquelle von dem Ende der Glasfaser abgesetzt zum Liegen kommt und damit den Strahlungsweg der Infrarotstrahlung freigibt, während es im andern Betriebszustand der Lichtquelle im Endbereich des Endes der Quelle und damit den IR-Strahlenweg unterbrechend zum Liegen kommt. Alternativ besteht auch die Möglichkeit, mittels einer Ausnehmung während des Betriebes den Strahlungsweg frei zu geben und bei Nichtbetrieb das Bimetall so in seiner Gestalt zu verändern, dass es den Strahlungsweg blockiert bzw. unterbricht.

Die Quelle für infrarote Strahlung und die Lichtquelle strahlen die infrarot Strahlung bzw. das sichtbare Licht aus und leiten es über im wesentlichen gemeinsame optische Komponenten beispielsweise über Reflektoren, Blenden, optische Sammel- oder Zerstreuungslinsen oder Filter in Richtung der Scheibe und durch diese hindurch, um die Umgebung des Fahrzeuges, in welches der erfindungsgemäße Scheinwerfer integriert ist, zu beleuchten. Durch diese erfindungsgemäße Ausbildung des Scheinwerfers ist ein kompakter, betriebssicherer und robuster Scheinwerfer gegeben, der auch unter extremen Bedingungen, beispielsweise extreme äußere Temperaturverhältnisse, Erschütterungen und ähnliches, sehr sicher funktioniert und die anderen Verkehrsteilnehmer vor einer Schädigung der Augen durch die Infrarotstrahlung weitgehend schützt.

Im folgenden wird die Erfindung anhand einer beispielhaften Ausführung näher erläutert.
- Figur 1: zeigt einen beispielhaften erfindungsgemäßen Scheinwerfer im Betrieb der Lichtquelle für sichtbares Licht und
- Figur 2: zeigt einen beispielhaften Scheinwerfer entsprechend Figur 1 bei nicht aktiver Lichtquelle.

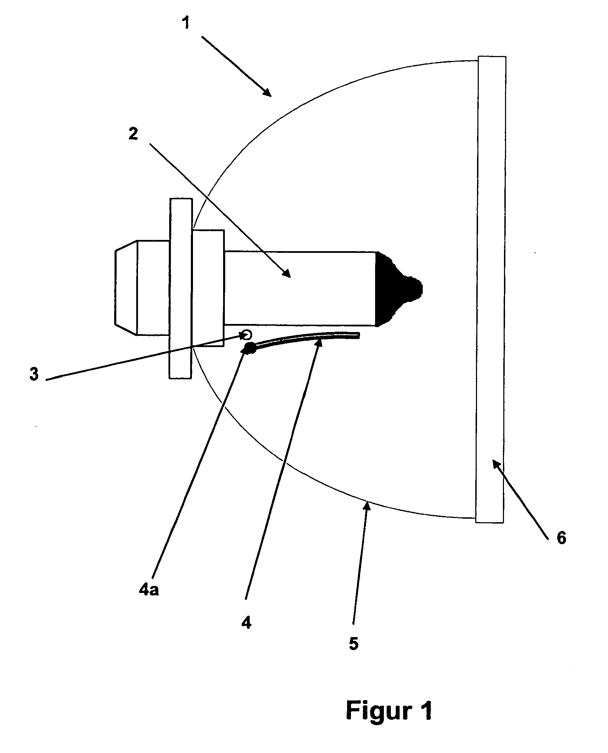

In Figur 1 ist ein schematische Aufbau eines erfindungsgemäßen Scheinwerfers 1 dargestellt. Der Scheinwerfer 1 für ein Kraftfahrzeug zeigt eine Lichtquelle 2 für sichtbares Licht und eine Quelle 3 für Infrarotstrahlung. Diese sind in einem Gehäuse 5 angeordnet, das eine Scheibe 6 beinhaltet, durch welche das sichtbare Licht der Lichtquelle 2 und die infrarote Strahlung der Quelle 3 aus dem Scheinwerfer 1 heraustritt. Das innere des Gehäuses 5 ist teilweise verspiegelt ausgebildet, so dass es die Funktion eines Reflektors beinhaltet, welcher das aus der Lichtquelle 2 und der Quelle 3 ausgetretene sichtbare Licht bzw. die ausgetretene infrarote Strahlung zu der Scheibe 6 leitet, um dort durch diese hindurchzutreten und aus dem Scheinwerfer 1 auszutreten.

Die Quelle 3 für infrarote Strahlung ist als Teil einer Glasfaser ausgebildet, aus deren Ende die infrarote Strahlung in den Scheinwerfer 1 austritt. Das Ende 3 der Glasfaser bildet die Quelle 3. Die Glasfaser ist durch das Gehäuse 5 hindurchgeführt und endet außerhalb des Scheinwerfers 1, wo eine starke Infrarotstrahlungsquelle angeordnet ist, welche beispielsweise als Infrarotlaser ausgebildet ist und die Infrarotstrahlung in die Glasfaser einkoppelt. Das Ende 3 der Glasfaser ist in unmittelbarer Nähe der Lichtquelle 2, welche eine Halogenlampe 2 darstellt, angeordnet. Sie liegt im unmittelbaren Einflussbereich der hohen Arbeitstemperatur der Halogenlampe 2. Durch die Ausbildung als Glasfaser ist sie geeignet, diesen hohen Temperaturen ohne Probleme zu widerstehen.

Durch die Wahl der Quelle 3 in Form eines Endes einer Glasfaser ist gewährleistet, dass die Quelle 3 eine ausgeprägte, gerichtete Abstrahlcharakteristik zeigt. Die ausgestrahlte Infrarotstrahlung wird in dem Scheinwerfer 1 quer zur Hauptausdehnungsrichtung der Halogenlampe 2 ausgestrahlt und über den Reflektor des Gehäuses 3 gemeinsam mit dem sichtbaren Licht der Halogenlampe 2 in Richtung der Scheibe 6 reflektiert und gemeinsam mit diesem aus dem Scheinwerfer 1 heraus abgegeben.

Zusätzlich befindet sich in dem Scheinwerfer 1 bzw. in dem Gehäuse 5 ein Bimetallelement 4, das als flächiges streifenförmiges Element ausgebildet ist und sich entlang der Halogenlampe 2 in unmittelbarer Nähe zu diesem erstreckt. Durch diese streifenförmige Ausbildung des Bimetallelements 4 und der Anordnung entlang der Halogenlampe 2 ist erreicht, dass der durch die Halogenlampe 2 bewirkte Temperatureinfluss auf das Bimetallelement 4 sich in einer starken Veränderung der Gestalt des Bimetallelementes 4 auswirkt.

In Figur 1 ist der Zustand dargestellt, in dem die Halogenlampe 2 im Betrieb ist und aufgrund des Betriebes sehr stark erhitzt und dadurch das Bimetallelement 4 deutlich erwärmt, so dass es die in Figur 1 dargestellte Biegung erfährt, die das Ende 3 der Glasfaser freigibt und es ermöglicht, dass die austretende Infrarotstrahlung ungehindert entlang des Strahlungsweges über die Reflektoreneigenschaft des Gehäuses 5 durch die Scheiben 6 hindurchtreten kann. Der in Figur 1 dargestellte Zustand zeigt den Betriebszustand des Schweinwerfers 1, in dem der Strahlungsweg der infraroten Strahlung von der Quelle 3 durch das Bimetallelement 4 nicht unterbrochen und damit geöffnet ist. Durch die in Figur 1 dargestellte Ausbildung des Bimetallelementes 4 ist es möglich, den Strahlungsweg der infraroten Strahlung aus dem Ende 3 der Glasfaser vollständig frei zu geben, so dass eine Behinderung der Ausbreitung der infraroten Strahlung auf dem Strahlungsweg durch das Bimetallelement 4 weitgehend verhindert ist.

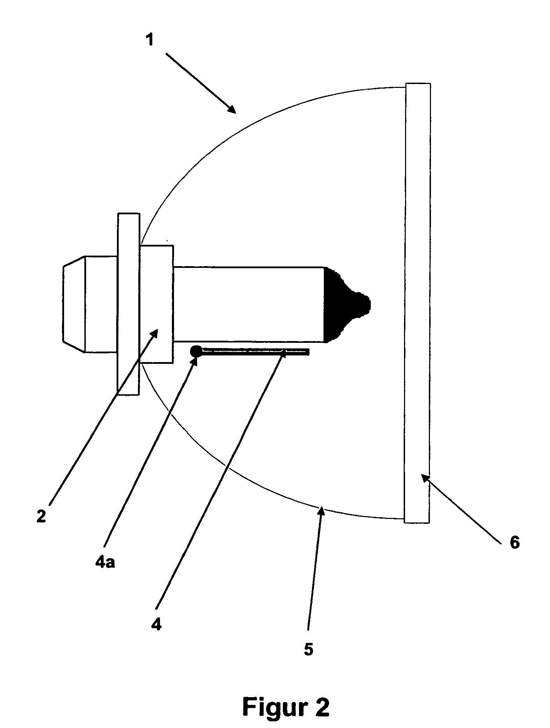

Das Bimetallelement 4 ist an dem dem Ende 3 der Glasfaser abgewandten Ende in seiner Lage fixiert und an dem anderen Ende, welches dem Ende 3 der Glasfaser zugewandt ist, beweglich ausgebildet. An diesem Ende ist eine kreisförmige, flächige Erweiterung 4a aufgebracht, die die Möglichkeit schafft, das Ende 3 der Glasfaser sicher und vollständig bzw. weitgehend vollständig zu bedecken. Dieser Zustand ist in Figur 2 dargestellt. Hier bedeckt die kreisförmige, flächige Erweiterung 4a des Bimetallelementes 4 das Ende 3 der Glasfaser. Hierdurch ist erreicht, dass aus dem Ende 3 der Glasfaser, welche die Quelle 3 der Infrarotstrahlung keine oder ein nur sehr kleiner Anteil daran den Weg durch die Scheibe 6 aus dem Scheinwerfer 1 herausfinden kann, da durch das Bimetallelement 4, insbesondere durch die kreisförmige flächige Erweiterung 4a, der Strahlungsweg unterbrochen ist. Bei der in Figur 2 dargestellten Anordnung ist das Bimetallelement 4 mit der kreisförmigen, flächigen Erweiterung 4a relativ zu dem Ende 3 der Glasfaser so angeordnet, dass sie in dem dargestellten Zustand unmittelbar aneinander anliegen und dadurch eine maximale und sehr sichere Unterbrechung des Strahlungsweges erreicht.

Der in Figur 2 dargestellte Zustand der Unterbrechung des Strahlungsweges der infraroten Strahlung ist dann gegeben, wenn die Halogenlampe 2 nicht im Betrieb ist und dadurch die Halogenlampe 2 nicht diese hohe Temperatur in ihrer Umgebung insbesondere am Bimetallelement 4 bewirkt wie im Betrieb und dadurch das Bimetallelement 4 eine geradlinigere Gestalt einnimmt und mit Hilfe der kreisförmigen, flächigen Erweiterung 4 das Ende 3 der Glasfaser als Quelle der Infrarotstrahlung bedeckt und dadurch den Strahlungsweg der infraroten Strahlung unterbricht.

Hierdurch ist sichergestellt, dass in dem Fall, dass die Halogenlampe 2 im Betrieb ist und sichtbares, helle, blendendes Licht ausstrahlt parallel dazu infrarote Strahlung ausgesandt werden kann, so dass sichergestellt ist, dass ein anderer Verkehrsteilnehmer, der in den Scheinwerder schaut, durch das sichtbare Licht geblendet wird und durch den Augenlidreflex vor einer Schädigung durch das sichtbare Licht und vielmehr noch durch die infrarote Strahlung geschützt ist. Dieser Schutz ist auch dann gegeben, wenn gerade durch das Ausfallen der Halogenlampe 2 oder einer sonstigen fehlerhaften Ansteuerung der Halogenlampe 2, diese nicht im Betrieb ist und dadurch die positive Wirkung des Augenlidreflexes nicht zum Schutz der Augen der Verkehrseilnehmer wirksam werden kann. Dies wird erfindungsgemäß erreicht, indem durch das Bimetallelement 4 der IR-Strahlungsweg sehr sicher und effizient unterbrochen bzw. geöffnet wird.

Dieser Scheinwerfer erweist sich nicht nur als sehr augensicher, sondern auch als sehr einfach, kostengünstig und robust, da er einerseits einen sehr einfachen Aufbau zeigt und andererseits auf den Einsatz von anfälligen komplexen elektronischen Bauteilen zur Darstellung einer zielgerichteten Unterbrechung und Reduktion der ausgesandten Infrarotstrahlungsleistung verzichtet.

## Patentansprüche

1. Scheinwerfer für ein Kraftfahrzeug mit einer Lichtquelle für sichtbares Licht und einer Quelle für Infrarotstrahlung und einer Scheibe durch die das sichtbare Licht und die Infrarotstrahlung aus dem Scheinwerfer austritt,
**dadurch gekennzeichnet,**
**dass** ein Bimetallelement (4) im Bereich des Strahlungsweges zwischen der Quelle (3) für die Infrarotstrahlung und der Scheibe (6) so angeordnet ist, dass bei Betrieb der Lichtquelle (2) der Strahlungsweg der Infrarotstrahlung von der Quelle (3) zur Scheibe (6) offen und im Nichtbetrieb der Lichtquelle der Weg unterbrochen ist.

2. Scheinwerfer für ein Kraftfahrzeug nach Anspruch 1,
**dadurch gekennzeichnet,**
**dass** das Bimetallelement (4) in Form eines Streifens oder einer Spirale ausgebildet ist.

3. Scheinwerfer für ein Kraftfahrzeug nach Anspruch 1 oder 2,
**dadurch gekennzeichnet,**
**dass** das Bimetallelement (4) in unmittelbarer Nähe zu der Lichtquelle (2) angeordnet ist.

4. Scheinwerfer für ein Kraftfahrzeug nach einem der Ansprüche 1 bis 3,
**dadurch gekennzeichnet,**
**dass** sich das Bimetallelement (4) entlang der Lichtquelle (2) erstreckt.

5. Scheinwerfer für ein Kraftfahrzeug nach einem der Ansprüche 1 bis 4,
**dadurch gekennzeichnet,**
**dass** die Quelle (3) für die Infrarotstrahlung eine ausgeprägte gerichtete Abstrahlcharakteristik aufweist.

6. Scheinwerfer für ein Kraftfahrzeug nach Anspruch 5,
**dadurch gekennzeichnet,**
**dass** die Quelle (3) das Ende einer Glasfaser, eine IR-Laserquelle oder eine IR-LED darstellen.

7. Scheinwerfer für ein Kraftfahrzeug nach Anspruch 5 oder 6,
**dadurch gekennzeichnet,**
**dass** das Bimetallelement (4) im Nichtbetrieb der Lichtquelle (2) der Quelle (3) benachbart insbesondere an diese anliegend angeordnet ist.

8. Scheinwerfer für ein Kraftfahrzeug nach Anspruch 7,
**dadurch gekennzeichnet,**
**dass** das Bimetallelement (4) im Bereich der Quelle (3) flächig erweitert ausgebildet ist.

9. Scheinwerfer für ein Kraftfahrzeug nach einem der Ansprüche 1 bis 7,
**dadurch gekennzeichnet,**
**dass** das Bimetallelement (4) eine Ausnehmung aufweist, durch welche beim Betrieb der Lichtquelle (2) die Infrarotstrahlung zur Scheibe (6) hindurchtritt, während beim Nichtbetrieb der Lichtquelle (2) der Strahlungsweg durch das Bimetallelement (4) unterbrochen ist.

10. Scheinwerfer für ein Kraftfahrzeug nach Anspruch 9,
**dadurch gekennzeichnet,**
**dass** die Ausnehmung des Bimetallelement (4) beim Betrieb der Lichtquelle (2) zur Strahlformung der Infrarotstrahlung verwendet wird.

11. Scheinwerfer für ein Kraftfahrzeug nach einem der Ansprüche 1 bis 10,
**dadurch gekennzeichnet,**
**dass** das Bimetallelement (4), die Lichtquelle (2) sowie die Quelle (3) in einem gemeinsamen Gehäuse (5) mit der Scheibe (6) angeordnet sind und das Bimetallelement (4) sowie die als Ende einer Glasfaser ausgebildete Quelle (3) in unmittelbarer Nähe zu der Lichtquelle (2) angeordnet sind.

## Claims

1. Motor vehicle headlight having a visible light source, an infrared radiation source and a cover lens through which the visible light and the infrared radiation can emerge from the headlight, **characterized in that** a bimetallic element (4) is arranged in the region of the radiation path between the infrared radiation source (3) and the cover lens (6) so that the radiation path of the infrared radiation from the source (3) to the cover lens (6) is open during operation of the light source (2) and the path is interrupted during non-operation of the light source.

2. Motor vehicle headlight according to Claim 1, **characterized in that** the bimetallic element (4) is designed in the form of a strip or a spiral.

3. Motor vehicle headlight according to Claim 1 or 2, **characterized in that** the bimetallic element (4) is arranged in the immediate vicinity of the light source (2).

4. Motor vehicle headlight according to one of Claims 1 to 3, **characterized in that** the bimetallic element (4) extends along the light source (2).

5. Motor vehicle headlight according to one of Claims 1 to 4, **characterized in that** the infrared radiation source (3) has a highly aligned emission characteristic.

6. Motor vehicle headlight according to Claim 5, **characterized in that** the source (3) constitutes the end of a glass fibre, an IR laser source or an IR-LED.

7. Motor vehicle headlight according to Claim 5 or 6, **characterized in that** the bimetallic element (4) is arranged next to the source (3), in particular bearing on it, during non-operation of the light source (2).

8. Motor vehicle headlight according to Claim 7, **characterized in that** the bimetallic element (4) is designed to be flatly widened in the region of the light source (3).

9. Motor vehicle headlight according to one of Claims 1 to 7, **characterized in that** the bimetallic element (4) has a recess through which the infrared radiation passes to the cover lens (6) during operation of the light source (2), whereas the radiation path is interrupted by the bimetallic element (4) during non-operation of the light source (2).

10. Motor vehicle headlight according to Claim 9, **characterized in that** the recess of the bimetallic element (4) is used for beam shaping of the infrared radiation during operation of the light source (2).

11. Motor vehicle headlight according to one of Claims 1 to 10, **characterized in that** the bimetallic element (4), the light source (2) and the source (3) are arranged in a common housing (5) with the cover lens (6), and the bimetallic element (4) as well as the source (3) designed as the end of the glass fibre are arranged in the immediate vicinity of the light source (2).

## Revendications

1. Projecteur pour un véhicule automobile comprenant une source de lumière visible et une source de rayonnement infrarouge et une vitre à travers laquelle la lumière visible et le rayonnement infrarouge sortent du projecteur, **caractérisé en ce qu'**un élément bilame (4) est disposé dans la zone du trajet du rayonnement entre la source (3) de rayonnement infrarouge et la vitre (6) de telle sorte que lorsque la source de lumière (2) est en fonctionnement, le trajet du rayonnement infrarouge est ouvert entre la source (3) et la vitre (6) et le trajet est interrompu lorsque la source de lumière n'est pas en fonctionnement.

2. Projecteur pour un véhicule automobile selon la revendication 1, **caractérisé en ce que** l'élément bilame (4) est réalisé sous la forme d'une bande ou d'une spirale.

3. Projecteur pour un véhicule automobile selon la revendication 1 ou 2, **caractérisé en ce que** l'élément bilame (4) est disposé à proximité immédiate de la source de lumière (2).

4. Projecteur pour un véhicule automobile selon l'une des revendications 1 à 3, **caractérisé en ce que** l'élément bilame (4) s'étend le long de la source de lumière (2).

5. Projecteur pour un véhicule automobile selon l'une des revendications 1 à 4, **caractérisé en ce que** la source (3) de rayonnement infrarouge présente une caractéristique de rayonnement fortement directionnelle.

6. Projecteur pour un véhicule automobile selon la revendication 5, **caractérisé en ce que** la source (3) représente l'extrémité d'une fibre de verre, d'une source laser à infrarouge ou d'une LED à infrarouge.

7. Projecteur pour un véhicule automobile selon la revendication 5 ou 6, **caractérisé en ce que** l'élément bilame (4), lorsque la source de lumière (2) n'est pas en fonctionnement, est disposé dans le voisinage de la source (3), notamment accolé à celle-ci.

8. Projecteur pour un véhicule automobile selon la revendication 7, **caractérisé en ce que** l'élément bilame (4) présente une forme élargie plane dans la zone de la source (3).

9. Projecteur pour un véhicule automobile selon l'une des revendications 1 à 7, **caractérisé en ce que** l'élément bilame (4) présente un creux à travers lequel, lorsque la source de lumière (2) est en fonctionnement, le rayonnement infrarouge passe vers la vitre (6), alors que lorsque la source de lumière (2) n'est pas en fonctionnement, le trajet du rayonnement à travers l'élément bilame (4) est interrompu.

10. Projecteur pour un véhicule automobile selon la revendication 9, **caractérisé en ce que** le creux dans l'élément bilame (4), lorsque la source de lumière (2) est en fonctionnement, est utilisé pour la mise en forme du rayonnement infrarouge.

11. Projecteur pour un véhicule automobile selon l'une des revendications 1 à 10, **caractérisé en ce que** l'élément bilame (4), la source de lumière (2) ainsi que la source (3) sont disposés dans un boîtier (5) commun avec la vitre (6), et l'élément bilame (4) ainsi que la source (3) réalisée sous la forme de l'extrémité d'une fibre de verre sont disposés à proximité immédiate de la source de lumière (2).
